(19) Europäisches Patentamt
European Patent Office
Office européen des brevets

(11) **EP 3 216 169 B1**

(12) **EUROPEAN PATENT SPECIFICATION**

(45) Date of publication and mention
of the grant of the patent:
**13.02.2019 Bulletin 2019/07**

(21) Application number: **15784550.4**

(22) Date of filing: **28.09.2015**

(51) Int Cl.:
*H04L 12/24* (2006.01)     *H04L 12/40* (2006.01)
*H04L 12/26* (2006.01)     *H04L 12/413* (2006.01)
*H04L 29/06* (2006.01)

(86) International application number:
**PCT/AT2015/050239**

(87) International publication number:
**WO 2016/070209 (12.05.2016 Gazette 2016/19)**

(54) **A METHOD TO IMPROVE THE QUALITY OF SERVICE IN A COMPUTER NETWORK**

VERFAHREN ZUR VERBESSERUNG DER SERVICEQUALITÄT IN EINEM COMPUTERNETZWERK

PROCÉDÉ POUR AMÉLIORER LA QUALITÉ DE SERVICE DANS UN RÉSEAU INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2014 AT 507912014**

(43) Date of publication of application:
**13.09.2017 Bulletin 2017/37**

(73) Proprietor: **TTTech Computertechnik AG
1040 Wien (AT)**

(72) Inventors:
• **STEINER, Wilfried**
**A-1040 Wien (AT)**
• **GUTIÉRREZ, Marina**
**A-1120 Wien (AT)**

(74) Representative: **Patentanwaltskanzlei
Matschnig & Forsthuber OG
Biberstraße 22
Postfach 36
1010 Wien (AT)**

(56) References cited:
**US-A1- 2002 097 679**

• **ROLAND KAMMERER ET AL: "Dynamic configuration of a time-triggered router for controller area network", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17 September 2012 (2012-09-17), pages 1-10, XP032350100, DOI: 10.1109/ETFA.2012.6489560 ISBN: 978-1-4673-4735-8**
• **POLEDNA STEFAN ET AL: "Deterministic system design with Time-Triggered technology", 2014 MICROELECTRONIC SYSTEMS SYMPOSIUM (MESS), IEEE, 8 May 2014 (2014-05-08), pages 1-4, XP032720023, DOI: 10.1109/MESS.2014.7010246 [retrieved on 2015-01-14]**
• **MARINA GUTIERREZ ET AL: "A configuration agent based on the time-triggered paradigm for real-time networks", 2015 IEEE WORLD CONFERENCE ON FACTORY COMMUNICATION SYSTEMS (WFCS), 1 May 2015 (2015-05-01), pages 1-4, XP055238586, DOI: 10.1109/WFCS.2015.7160584 ISBN: 978-1-4799-8244-8**

EP 3 216 169 B1

**Description**

The invention relates to a method to improve the quality of service in a computer network consisting of nodes and starcouplers and/or access points and wireless and/or wired connections, by changing a current configuration (CUR_CONF) of the computer network to a new configuration (NEW_CONF) of the computer network.

The invention further relates to a computer network for performing such a method.

A method to improve the quality of service is described in US 2002/097679 A1 or in ROLAND KAMMERER ET AL: "Dynamic configuration of a time-triggered router for controller area network", PROCEEDINGS OF 2012 IEEE 17TH INTERNATIONAL CONFERENCE ON EMERGING TECHNOLOGIES & FACTORY AUTOMATION (ETFA 2012): KRAKOW, POLAND, 17-21 SEPTEMBER 2012, IEEE, PISCATAWAY, NJ, 17 September 2012 (2012-09-17), pages 1-10.

POLEDNA STEFAN ET AL: "Deterministic system design with Time-Triggered technology", 2014 MICROELECTRONIC SYSTEMS SYMPOSIUM (MESS), IEEE, 8 May 2014 (2014-05-08), pages 1-4, describes an Ethernet system with a time-triggered architecture with the purpose of improving the real-time performance of Ethernet, wherein a complex scheduling routine is required to establish time-triggered communication.

**Field of Technology**

The invention is in the general area of computer networking and the specialized discipline of distributed real-time applications. The invention aims to automatized analyze a given configuration of a computer network for distributed real-time applications and consequently to autonomously improve certain quality parameters or give recommendations on how to improve certain quality parameters of the network.

**Brief Description of Invention**

The invention is in the general area of computer networking and the specialized discipline of distributed real-time applications. A computer network consists of different types of components: nodes, starcouplers (such as switches, routers, bridges, etc.), and/or wireless access points. In wired parts of the network the nodes are connected to one or a multitude of starcoupler with wired connections. In wireless parts of the network, the nodes are connected directly to each other with wireless connections or are connected to one or a multitude of access points. The computer network uses messages to distribute information within the network. A flow of messages is a set of messages that are sent one after another (potentially with some minimum temporal interval in between two consecutive messages) with one or many common characteristics. Typically such a common characteristic is an identifier as transported in the messages themselves. For example in Ethernet the MAC media access control destination address can be used to identify the flow a message belongs to.

For distributed real-time applications the quality of service (QoS) provided by the network is of relevance. Quality of Service parameters are typically the worst-case communication latency and the worst-case communication jitter of the messages communicated in the network, but can also be in adjacent areas like security or reliability, etc. As of today, a human system administrator or human system designer configures the network in a way such that the respective Quality of Service for the respective distributed real-time application is met and/or to optimize the system utilization.

It is an object of the invention to improve the optimization of a network configuration starting from a current network configuration by monitoring messages, extracting results and generating new, optimized traffic parameters using a method functioning to a large extent automatically without the need of the intervention of human operators.

The invention reaches these objections starting from a network mentioned above which is characterized by

- the computer network in the current configuration communicates one message or a multitude of messages and
- a monitor observes at least some traffic pattern that the message or multitude of messages generate and
- an extractor formulates the traffic pattern of the message or multitude of messages and
- the extractor following said analysis generates one or many traffic parameters to the message or multitude of messages and
- an optimizer uses the traffic parameters to generate the new configuration and/or to generate recommendations for a new configuration.

One of the many use cases of the invention is in the automation of this manual configuration process. For this, the invention presents a novel method and device to improve one or many of the Quality of Service (QoS) parameters in a computer network. This invention specifies a method and device to monitor the traffic in an existing computer network, to learn regularities of in the traffic patterns and consequently to reconfigure the network or to give recommendations on how to reconfigure the network to improve the one or many quality of service QoS parameters. In one embodiment, the invention describes a method and device to learn that certain traffic is sent periodically with a measured period and reconfigures the network in a way such that the periodic traffic is being communicated in the network using a time-triggered communication paradigm.

It may be advantageous if the computer network in a current configuration communicates a subset of the messages according an unsynchronized communication paradigm and the monitor observes the traffic pattern of said set of unsynchronized messages and the extractor analyses said traffic pattern and the extractor assigns one parameter or a multitude of parameters to said unsynchronized messages and the optimizer uses the traffic parameters to generate a new configuration in which a unsynchronized message or a multitude of unsynchronized messages are communicated according a time-triggered communication paradigm at least through a part of the computer network.

It can also be advisable if the optimizer executes one or a multitude of the following optimization steps:

- modifying the priorities with which messages are forwarded by starcouplers
- modifying the routes of messages through a network (i.e., a message will be sent along a different path)
- encrypting or decrypting messages or parts of messages

  ∘ modifying the encryption key used for encryption of messages or parts of messages

- stop to encrypt/decrypt messages or parts of messages
- modifying the communication speed with which messages are communicated on the communication links 110, e.g., in wireless communication examples
- packing of several messages into a single message
- splitting a single message in several messages
- modifying the contents of a message or a multitude of messages

In the following example realizations are discussed that involve a wired network consisting of nodes connected to starcouplers. Other realizations of the invention that use a wireless network or a mixed wired/wireless network are not discussed as example realizations, but follow the design principles as discussed for the wired networks below.

**Brief Description of Figures**

The invention will be explained hereinafter in greater detail on the basis of the drawing. In the drawings

FIG. 1 depicts a computer network in accordance to the state of the art,
FIG. 2 depicts another computer network according to the state of the art,
FIG. 2a depicts an exemplary flowchart of traffic as communicated in the network depicted in FIG 2,
FIG. 3 depicts with the help of a flowchart monitoring, extracting, and optimizing of traffic in a computer network,
FIG. 4 shows an exemplary network with a monitor,
FIG. 5 gives an example of an extractor with its input and output,
FIG. 6 gives an example of an optimization with the help of a time diagram,
FIG. 7 gives an example of time-triggered communication with the help of a time diagram (state of the art),
FIG. 8 gives another example of time-triggered communication similar to Fig. 7 and
FIG. 9 gives an exemplary realization of an integrated extractor and optimizer within a network.

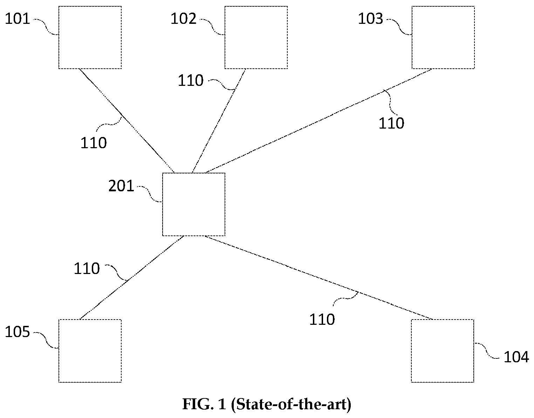

FIG. 1 depicts an example of a computer network with nodes 101 - 105 that are connected with wired communication links 110, preferably bi-directional communication links, to a starcoupler 201. The nodes 101 - 105 exchange messages with each other, by sending the messages to the starcoupler 201, which then forwards the messages to the respective receivers. Furthermore, the starcoupler 201 may generate messages on its own and transmit these messages to the nodes 101 - 105.

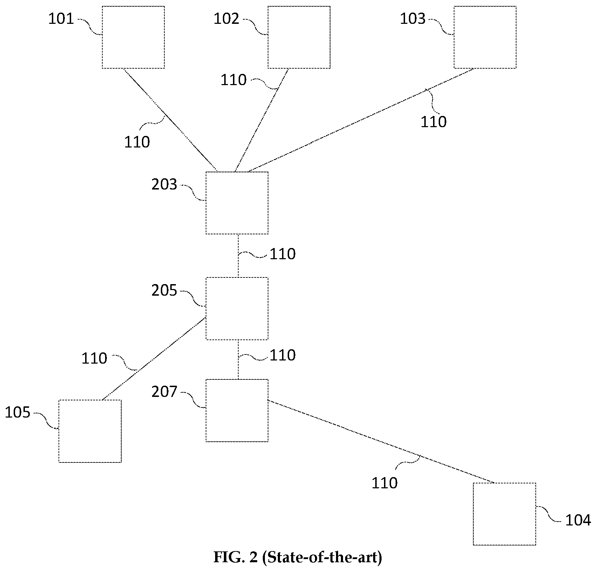

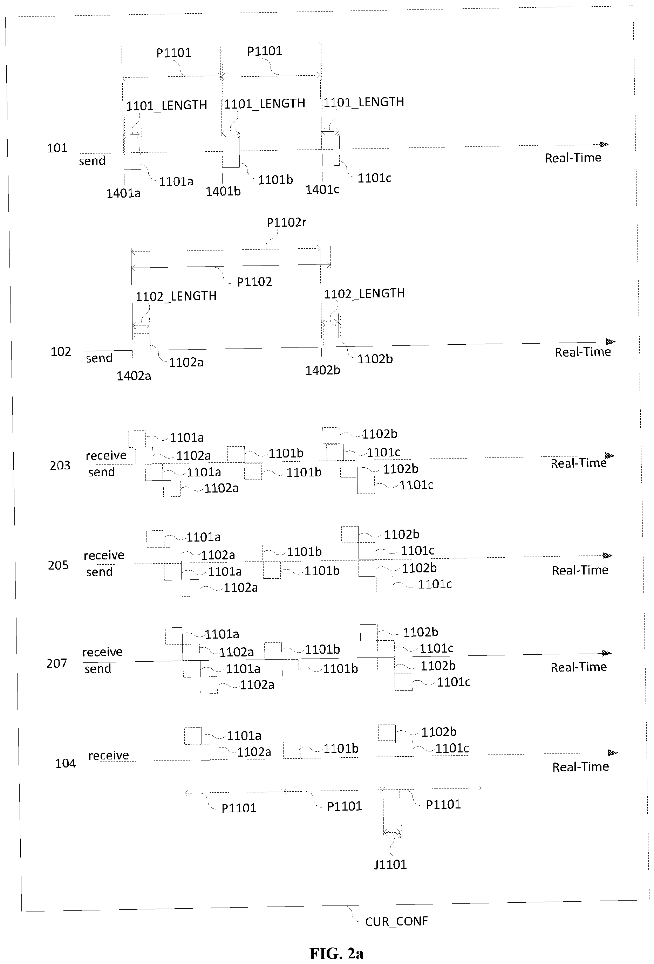

FIG. 2 depicts an example of a computer network in which multiple starcouplers 203, 205, 207 are connected to each other and the nodes 101 - 105 in the network are connected only to a subset of the starcouplers 203, 205, 207. The communication of two nodes may involve two or more starcouplers 203, 205, 207.

FIG. 2a depicts a flowchart of an example how messages are communicated in the network depicted in FIG. 2 that is configured according a current configuration CUR_CONF. The flowchart depicts nodes 101 and 102 sending messages 1101a, 1101b, 1101c, of length 1101_LENGTH containing a message identifier 1101 and messages 1102a, 1102b of length 1102_LENGTH containing a message identifier 1102 to the starcoupler 203. Starcoupler 203 forwards the messages to starcoupler 205. Starcoupler 205 forwards the messages to starcoupler 207. Finally, starcoupler 207 forwards the messages to the receiving node 104. Messages 1101a, 1101b, 1101c are part of the same flow of messages.

Furthermore, 1101a, 1101b, 1101c are periodic, meaning that node 101 is configured to send the messages sequentially with a temporal distance of P1101 timeunits apart from each other. Analogously, messages 1102a and 1102b are part of the same flow of messages. Also, messages 1102a and 1102b are periodic, meaning that node 102 is configured to send the messages sequentially with a temporal distance of P1102 timeunits apart from each other. As both nodes 101 and 102 are artificial entities, they are not capable of perfectly measuring time, thus, the message periods P1101 and P1102 may vary slightly. For example due to imperfect oscillators, node 102 may send its message 1102b not precisely P1102 after message 1102a, but already early after P1102r timeunits.

As depicted the points in time 1401a and 1402a of transmission of the respective messages 1101a and 1102a from nodes 101 and 102 occur close to each other such that the starcoupler 203 needs to serialize the messages when forwarding them to starcoupler 205. As it happens in this scenario, message 1101a is received slightly before 1102a and, thus, the starcoupler forwards 1101a at first, immediately followed by message 1102a.

As depicted, the next message 1101b from node 101 is sent at 1401b. When the message is received by node 104 the observed duration between the reception of message 1101a and 1101b is equal to the duration P1101.

As depicted, the next message 1101c from node 101 is sent at 1401c. At about the same point in time (at 1402b) also node 102 sends a message 1102b (P1102r timeunits after its preceding message 1102a). As this time message 1102b is received slightly earlier than message 1101c, the starcoupler 203 forwards the message 1102b before message 1101c. Consequently, node 104 receives message 1101c at a point in time P1101+J1101 timeunits after the previously receive message 1101b.

Hence, the indeterministic ordering of messages 1101a, 1102a, 1101c, 1102b leads to a communication jitter J1101 and potential increase of latency (of J1101) of the flow of messages 1101a, 1101b, 1101c. As depicted in this example the jitter J1101 is equal the length of the message length 1102b. Hence, with growing length of message 1102b also the jitter and latency of the message flow from node 101 increases directly and proportionally.

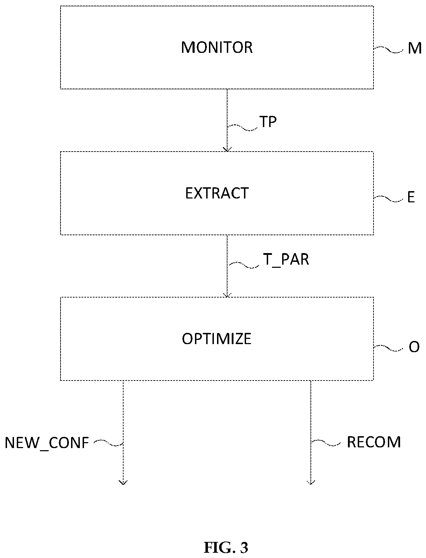

FIG. 3 depicts the principle of the invention: in a computer network messages are communicated between nodes and/or starcouplers, where the messages are transmitted, forwarded, and received by the nodes/starcouplers following a current network configuration CUR_CONF. In such a computer network, a monitor M observes a subset of such messages. Of particular interest in this observation are temporal properties of the messages, e.g.:

- points in time when one, two, or more consecutive messages of the same flow, e.g. messages 1101a, 1101b, 1101c, are received at a node and/or starcoupler and/or multitude of nodes and/or starcoupler,
- points in time when one, two, or more consecutive messages of the same flow, e.g., messages 1101a, 1101b, 1101c, are forwarded by a starcoupler or a multitude of starcouplers,
- the relation of one, two, or more reception/forwarding points in time of messages belonging to two or more different flows,
- the message length of one, two, or more messages.

The monitor M formulates traffic patterns TP based on these observations and provides these traffic patterns TP as input to an extractor E. The extractor E generates one or a multitude of traffic parameters T_PAR for said messages, e.g., messages 1101a, 1101b, 1101c. Such traffic parameters T_PAR are for example:

- message length(s),
- classification of said messages into: periodic, sporadic, quasi-periodic messages, etc.,
- message periods of said message(s),
- variance in the estimation of the period of said message(s), and/or
- estimated minimum inter-arrival time of said message(s) and their variances.

Based on the traffic parameters T_PAR an optimizer O generates either a new network configuration NEW_CONF with improved QoS and/or provides recommendation RECOM to the user of the computer network how to improve QoS.

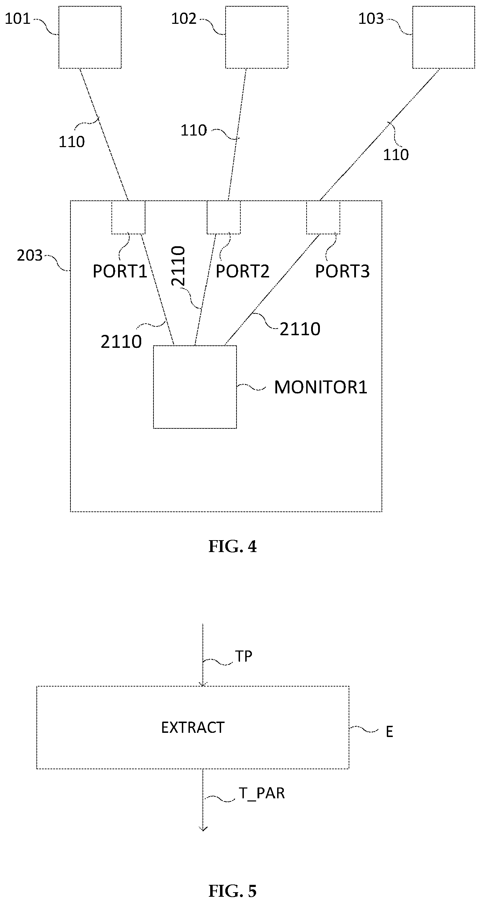

FIG. 4 depicts an example realization of a monitor M. In this example starcoupler 203 implements a function MONITOR1 that observes the arrival points in time and the message lengths of messages on the ports PORT1, PORT2, PORT3. The observed information is available to the MONITOR1 via information channels 2110 from the ports PORT1, PORT2, PORT3. In an exemplary realization these information channels 2110 may be implemented using hardware registers, shared memories, or similar techniques. MONITOR1 is thus able to collect information of the messages transmitted from the nodes 101, 102, 103 to the starcoupler 203. For example, given the flowchart in FIG 2a, the monitor MONITOR1 can learn the send points in time 1401a, 1401b, 1401c, 1402a, 1402b, of the messages 1101a, 1101b, 1101c, 1102a, 1102b. In this example said points in time, the message identifiers 1101, 1102, and message lengths form the traffic pattern TP that is handed to the extractor E.

Fig. 5 depicts an example application of an extractor E. In this example, the extractor E takes as input the traffic pattern TP from the monitor as described in FIG 4. I.e., the extractor E takes as input the send points in time 1401a, 1401b, 1401c, 1402a, 1402b, of the messages 1101a, 1101b, 1101c, 1102a, 1102b, the message identifiers 1101, 1102 and the message lengths. For each message as identified by the message identifier 1101, 1102, the extractor produces a set of parameters T_PAR, comprising for example:

| Message Identifier | Message Length | Message Class | Message Period |
|---|---|---|---|
| 1101 | 1101_LENGTH | periodic | 1101_PER |
| 1102 | 1102_LENGTH | periodic | 1102_PER |

While the message lengths 1101_LENGTH, 1102_LENGTH can be directly measured by the monitor, the message periods 1101_PER, 1102_PER need to be calculated by the extractor E from the send points in time 1401a, 1401b, 1401c, 1402a, 1402b. For this calculation statistical functions can be used. An example of a simple statistical function is:

1. for each message identifier, subtract consecutive send points in time from each other:

   a. for messages identified by 1101: 1401b - 1401a; 1401c - 1401b;
   b. for messages identified by 1102: 1402b - 1402a

2. for each message identifier, select the minimum value of the preceding subtractions as the message period

   a. for messages identified by 1101:

$$1101\_PER = \min(1401b - 1401a; 1401c - 1401b)$$

   b. for message identified by 1102:

$$1102\_PER = 1402b - 1402a$$

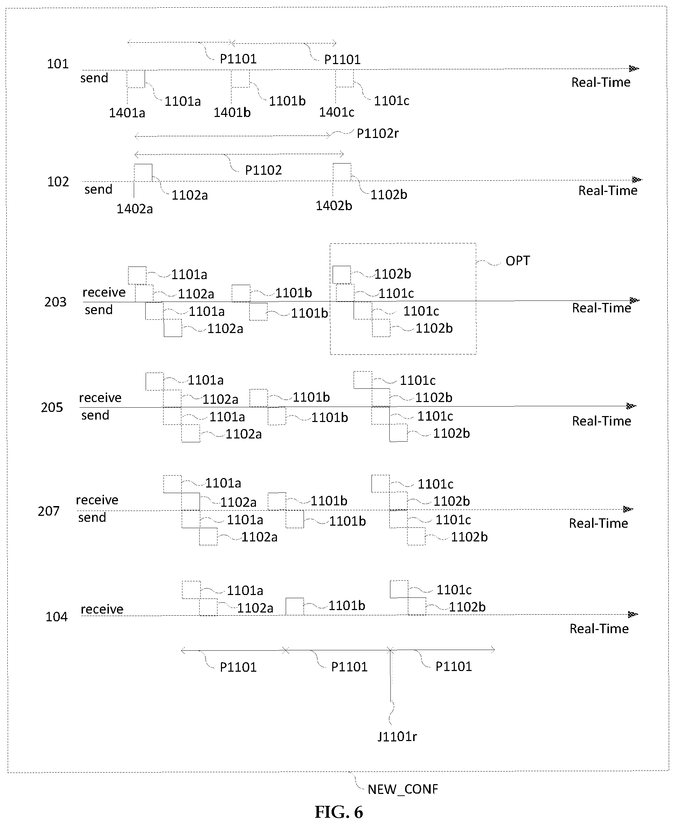

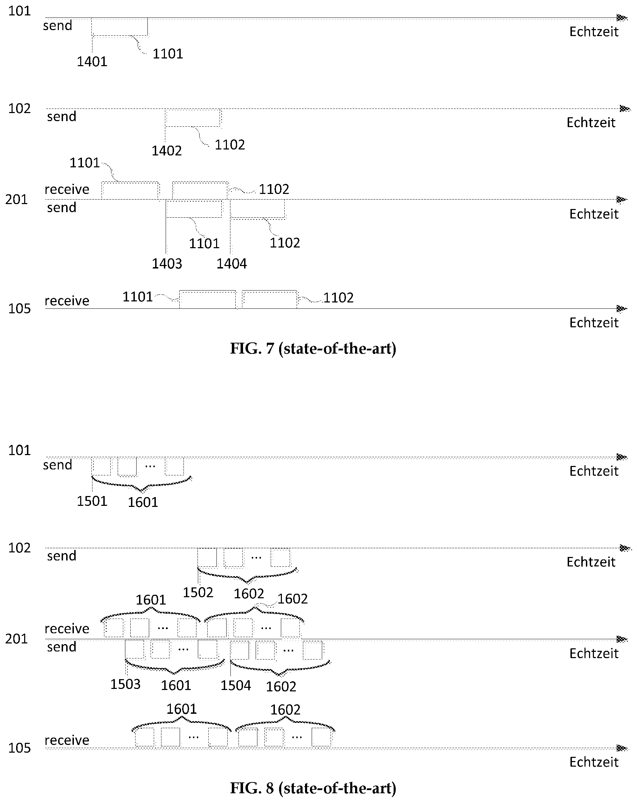

FIG. 6 depicts an example application of an optimizer. In this example the optimizer improves the traffic as shown in the flowchart of FIG.2a, in particular, the jitter of messages identified with message identifier 1101, by reconfiguring the network according a new configuration NEW_CONF. In this example, the new configuration NEW_CONF causes (parts of) the network to communicate messages identified by message identifier 1101 as time-triggered communication (a description of time-triggered communication is given in below in Figs. 7 and 8).

The first part, until the transmission of message 1102b from node 102, the flowchart is identical to the one presented in FIG. 2a. However, in FIG. 6 the starcoupler 203 is implementing an optimization step in that it handles message 1101c as time-triggered message. In particular, this means that starcoupler 203 knows when message 1101c will arrive (because of the parameter set T_PAR calculated by the extractor E) and will not start to forward message 1102b as in FIG. 2a. On the contrary, the starcoupler 203 will wait for message 1101c to arrive and forward 1101c first, before message 1102b. The optimization step OPT is highlighted in FIG 6. As depicted, 1101c is forwarded to starcouplers 205 and consequently also to starcoupler 207 and finally is received by node 104. As depicted the communication jitter J1101r is almost 0 in this scenario as opposed to the value J1101 in FIG. 2a.

Other examples of optimizations (not depicted) are:

- modifying the priorities with which messages are forwarded by starcouplers
- modifying the routes of messages through a network (i.e., a message will be sent along a different path)
- encrypting or decrypting messages or parts of messages

  ∘ modifying the encryption key used for encryption of messages or parts of messages

- stop to encrypt/decrypt messages or parts of messages
- modifying the communication speed with which messages are communicated on the communication links 110, e.g., in wireless communication examples
- packing of several messages into a single message

- splitting a single message in several messages
- modifying the contents of a message or a multitude of messages

FIG. 7 depicts a flowchart describing an example of time-triggered communication. In this example the nodes 101 and 102 as depicted in Fig. 1 exchange time-triggered messages 1102 and 1102 via the starcoupler 201 to the node 105. The defining characteristic of time-triggered communication is that the points in time of the transmission of the messages 1401, 1402 and/or the points in time of the forwarding of the messages 1403, 1404 are already known ahead in time of the transmission/forwarding of the messages. The points in time of transmission 1401, 1402 and/or the points in time of the forwarding 1403, 1404 of the messages can be assigned, e.g., already at the design time of the computer network. The points in time of transmission, forwarding, reception, or a subset of them are called the communication schedule. The synchronization of local clocks in nodes and starcouplers (and/or in access points) enables that the communication schedule in the nodes and/or starcoupler and/or access points is executed synchronously. Different synchronization protocols can be used to synchronize said local clocks, for example, existing synchronization standards are: SAE AS6802, IEEE 1588, and IEEE 802.1AS.

FIG. 8 depicts another flowchart of an example of time-triggered communication. In this example groups of messages 1601, 1602 are assigned to single points in time of transmission 1501, 1502 and points in time of forwarding 1503, 1504. As depicted in Fig. 4 the assignment of messages to groups 1601, 1602 is not changed as the messages are delivered through the network. However, this is not necessarily always the case. For example, a starcoupler 201 may implement only one point in time of forwarding 1503 and, when this point in time is reached, then forwarding all messages either belonging to group 1601 or group 1602. In general, the relation of messages to groups can vary for each node and/or starcoupler and/or access point.

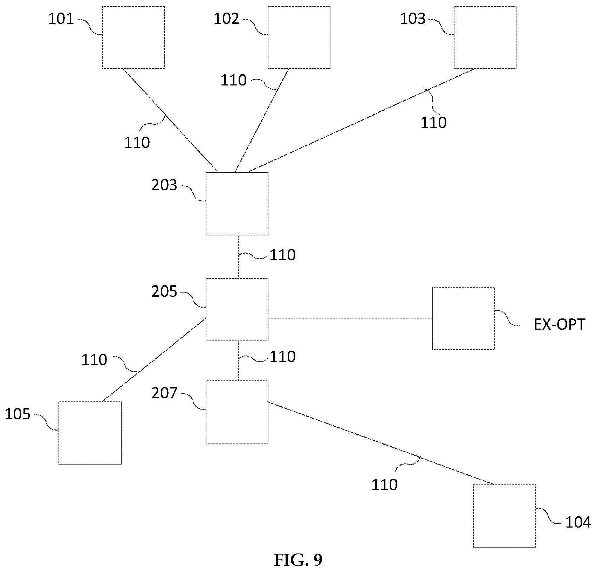

FIG. 9 depicts a computer network consisting of nodes 101-105 and starcouplers 203, 205, 207. Furthermore FIG. 9 shows an example of an element EX-OPT that realizes the extractor E and the optimizer O function. Additionally the device may execute the optimizer function OPTIMIZE. Another realization would jointly implement the extractor and the optimizer functions in a node or a starcoupler. Other realizations implement the extractor and the optimizer in individual components, for example in different, nodes and/or starcouplers.

**Claims**

1. A method to improve the quality of service in a computer network consisting of nodes and starcouplers and/or access points and wireless and/or wired connections, by changing a current configuration (CUR_CONF) of the computer network to a new configuration (NEW_CONF) of the computer network, wherein

   • the computer network in the current configuration (CUR_CONF) communicates one message or a multitude of messages (1101a, 1101b, 1101c, 1102a, 1102b) and
   • a monitor (M) observes at least some traffic pattern (TP) that the message or multitude of messages (1101a, 1101b, 1101c, 1102a, 1102b) generate and
   • an extractor (E) takes the said traffic pattern (TP) as input from the monitor (M) and generates one or a multitude of traffic parameters (T_PAR) for said message or multitude of messages (1101a, 1101b, 1101c, 1102a, 1102b) and
   • an optimizer (O) uses the traffic parameters (T_PAR) to generate the new configuration (NEW_CONF) and/or to generate recommendations (RECOM) for a new configuration (NEW_CONF), **characterized in that**

   the computer network in a current configuration (CUR_CONF) communicates a subset (1101a, 1101b, 1101c, 1102a, 1102b) of the messages (1101a, 1101b, 1101c, 1102a, 1102b) according an unsynchronized communication paradigm and the monitor (M) observes the traffic pattern (TP) of said set of unsynchronized messages (1101a, 1101b, 1101c, 1102a, 1102b) and the extractor (E) analyses said traffic pattern (TP) and the extractor (E) assigns one parameter or a multitude of parameters to said unsynchronized messages (1101a, 1101b, 1101c, 1102a, 1102b) and the optimizer (O) uses the traffic parameters (T_PAR) to generate a new configuration (NEW_CONF) in which a unsynchronized message or a multitude of unsynchronized messages (1101a, 1101b, 1101c) are communicated according a time-triggered communication paradigm at least through a part of the computer network.

2. Method according claim 1, wherein the optimizer (O) executes one or a multitude of the following optimization steps:

   - modifying the priorities with which messages are forwarded by starcouplers
   - modifying the routes of a message through a network such that the message will be sent along a different path
   - encrypting or decrypting messages or parts of messages

o modifying the encryption key used for encryption of messages or parts of messages

- stop to encrypt/decrypt messages or parts of messages
- modifying the communication speed with which messages are communicated on the communication links
- packing of several messages into a single message
- splitting a single message in several messages
- modifying the contents of a message or a multitude of messages

3. A computer network consisting of nodes and starcouplers and/or access points and wireless and/or wired connections, wherein for improving the quality of service in the computer network by changing a current configuration (CUR_CONF) of the computer network to a new configuration (NEW_CONF) of the computer network,

   • the computer network in the current configuration (CUR_CONF) is configured to communicate one message or a multitude of messages (1101a, 1101b, 1101c, 1102a, 1102b) and
   • wherein the computer network comprises a monitor (M) which is configured to observe at least some traffic pattern (TP) that the message or multitude of messages (1101a, 1101b, 1101c, 1102a, 1102b) generate, and wherein
   • the computer network comprises an extractor (E) which is configured to take the said traffic pattern (TP) as input from the monitor (M) and to generate one or a multitude of traffic parameters (T_PAR) for said message or multitude of messages (1101a, 1101b, 1101c, 1102a, 1102b) and
   • wherein the computer network comprises an optimizer (O) which is configured to use the traffic parameters (T_PAR) to generate the new configuration (NEW_CONF) and/or to generate recommendations (RECOM) for a new configuration (NEW_CONF),

   **characterized in that** the computer network in a current configuration (CUR_CONF) is configured to communicate a subset (1101a, 1101b, 1101c, 1102a, 1102b) of the messages (1101a, 1101b, 1101c, 1102a, 1102b) according an unsynchronized communication paradigm and the monitor (M) is configured to observe the traffic pattern (TP) of said set of unsynchronized messages (1101a, 1101b, 1101c, 1102a, 1102b) and the extractor (E) is configured to analyse said traffic pattern (TP) and the extractor (E) is configured to assign one parameter or a multitude of parameters to said unsynchronized messages (1101a, 1101b, 1101c, 1102a, 1102b) and the optimizer (O) is configured to use the traffic parameters (T_PAR) to generate a new configuration (NEW_CONF) in which a unsynchronized message or a multitude of unsynchronized messages (1101a, 1101b, 1101c) are communicated according a time-triggered communication paradigm at least through a part of the computer network.

## Patentansprüche

1. Verfahren zum Verbessern der Servicequalität in einem Computernetzwerk, das aus Knoten und Sternkopplern und/oder Zugriffspunkten und drahtlosen und/oder verdrahteten Verbindungen besteht, durch Ändern einer aktuellen Konfiguration (CUR_CONF) des Computernetzwerks in eine neue Konfiguration (NEW_CONF) des Computernetzwerks, wobei

   • das Computernetzwerk in der aktuellen Konfiguration (CUR_CONF) eine Mitteilung oder eine Mehrzahl von Mitteilungen (1101a, 1101b, 1101c, 1102a, 1102b) überträgt, und
   • eine Überwachungseinrichtung (M) zumindest ein gewisses Datenverkehrsmuster (TP) beobachtet, das von der Mitteilung oder der Mehrzahl von Mitteilungen (1101a, 1101b, 1101c, 1102a, 1102b) erzeugt wird, und
   • eine Extraktionseinrichtung (E) das Datenverkehrsmuster (TP) als Eingabe aus der Überwachungseinrichtung (M) nimmt und einen oder eine Mehrzahl von Datenverkehrsparametern (T_PAR) für die Mitteilung oder die Mehrzahl von Mitteilungen (1101a, 1101b, 1101c, 1102a, 1102b) erzeugt, und
   • eine Optimierungseinrichtung (O) die Datenverkehrsparameter (T_PAR) verwendet, um die neue Konfiguration (NEW_CONF) zu erzeugen und/oder um Empfehlungen (RECOM) für eine neue Konfiguration (NEW_CONF) zu erzeugen, **dadurch gekennzeichnet, dass**

   das Computernetzwerk in einer aktuellen Konfiguration (CUR_CONF) einen Untersatz (1101a, 1101b, 1101c, 1102a, 1102b) der Mitteilungen (1101a, 1101b, 1101c, 1102a, 1102b) gemäß einem Paradigma einer unsynchronisierten Kommunikation übermittelt und die Überwachungseinrichtung (M) das Datenverkehrsmuster (TP) des Satzes unsynchronisierter Mitteilungen (1101a, 1101b, 1101c, 1102a, 1102b) beobachtet und die Extraktionseinrichtung (E) das Datenverkehrsmuster (TP) analysiert und die Extraktionseinrichtung (E) den unsynchronisierten Mitteilungen (1101a, 1101b, 1101c, 1102a, 1102b) einen Parameter aus einer Mehrzahl von Parametern zuweist und die Optimierungseinrichtung (O) die Datenverkehrsparameter (T_PAR) verwendet, um eine neue Konfiguration (NEW_CONF) zu erzeugen, in der eine unsynchronisierte Mitteilung oder eine Mehrzahl von unsynchronisierten Mitteilungen (1101a, 1101b, 1101c) gemäß einem Paradigma einer zeitgesteuerten Kommunikation zumindest durch einen Teil des Computernetzwerks übermittelt wird.

2. Verfahren nach Anspruch 1, wobei die Optimierungseinrichtung (O) einen oder eine Mehrzahl der folgenden Optimierungsschritte ausführt:

- Modifizieren der Prioritäten, mit denen Mitteilungen von Sternkopplern weitergeleitet werden,
- Modifizieren der Routen einer Mitteilung durch ein Netzwerk, so dass die Mitteilung auf einem anderen Weg gesendet wird,
- Verschlüsseln oder Entschlüsseln von Mitteilungen oder Teilen von Mitteilungen,

◦ Modifizieren des Verschlüsselungscodes, der für die Verschlüsselung von Mitteilungen oder Teilen von Mitteilungen verwendet wird,

- Beenden des Verschlüsselns/Entschlüsselns von Mitteilungen oder von Teilen von Mitteilungen,
- Modifizieren der Kommunikationsgeschwindigkeit, mit der Mitteilungen über die Kommunikationsstrecken übertragen werden,
- Zusammenfassen mehrerer Mitteilungen zu einer einzigen Mitteilung,
- Aufteilen einer einzigen Mitteilung in mehrere Mitteilungen,
- Modifizieren des Inhalts einer Mitteilung oder einer Mehrzahl von Mitteilungen.

3. Computernetzwerk, das aus Knoten und Sternkopplern und/oder Zugriffspunkten und drahtlosen und/oder verdrahteten Verbindungen besteht, wobei zur Verbesserung der Servicequalität in dem Computernetzwerk durch Ändern einer aktuellen Konfiguration (CUR_CONF) des Computernetzwerks in eine neue Konfiguration (NEW_CONF) des Computernetzwerks

• das Computernetzwerk in der aktuellen Konfiguration (CUR_CONF) dafür ausgelegt ist, eine Mitteilung oder eine Mehrzahl von Mitteilungen (1101a, 1101b, 1101c, 1102a, 1102b) zu übertragen, und
• wobei das Computernetzwerk eine Überwachungseinrichtung (M) umfasst, die dafür ausgelegt ist, zumindest einen Teil eines Datenverkehrsmusters (TP) zu beobachten, das von der Mitteilung oder von der Mehrzahl von Mitteilungen (1101a, 1101b, 1101c, 1102a, 1102b) erzeugt wird, und wobei
• das Computernetzwerk eine Extraktionseinrichtung (E) umfasst, die dafür ausgelegt ist, das Datenverkehrsmuster (TP) als Eingabe aus der Überwachungseinrichtung (M) zu nehmen und einen oder eine Mehrzahl von Datenverkehrsparametern (T_PAR) für die Mitteilung oder die Mehrzahl von Mitteilungen (1101a, 1101b, 1101c, 1102a, 1102b) zu erzeugen, und
• wobei das Computernetzwerk eine Optimierungseinrichtung (O) umfasst, die dafür ausgelegt ist, die Datenverkehrsparameter (T_PAR) zu verwenden, um die neue Konfiguration (NEW_CONF) zu erzeugen und/oder um Empfehlungen (RECOM) für eine neue Konfiguration (NEW_CONF) zu erzeugen, **dadurch gekennzeichnet, dass**

das Computernetzwerk in einer aktuellen Konfiguration (CUR_CONF) dafür ausgelegt ist, einen Untersatz (1101a, 1101b, 1101c, 1102a, 1102b) der Mitteilungen (1101a, 1101b, 1101c, 1102a, 1102b) gemäß einem Paradigma einer unsynchronisierten Kommunikation zu übermitteln und die Überwachungseinrichtung (M) dafür ausgelegt ist, das Datenverkehrsmuster (TP) des Satzes unsynchronisierter Mitteilungen (1101a, 1101b, 1101c, 1102a, 1102b) zu beobachten, und die Extraktionseinrichtung (E) dafür ausgelegt ist, das Datenverkehrsmuster (TP) zu analysieren, und die Extraktionseinrichtung (E) dafür ausgelegt ist, den unsynchronisierten Mitteilungen (1101a, 1101b, 1101c, 1102a, 1102b) einen Parameter aus einer Mehrzahl von Parametern zuzuweisen, und die Optimierungseinrichtung (O) dafür ausgelegt ist, die Datenverkehrsparameter (T_PAR) zu verwenden, um eine neue Konfiguration (NEW_CONF) zu erzeugen, in der eine unsynchronisierte Mitteilung oder eine Mehrzahl von unsynchronisierten Mitteilungen (1101a, 1101b, 1101c) gemäß einem Paradigma einer zeitgesteuerten Kommunikation zumindest durch einen Teil des Computernetzwerks übermittelt wird.

## Revendications

1. Procédé pour améliorer la qualité de service dans un réseau d'ordinateurs consistant en des noeuds et des coupleurs en étoile et/ou des points d'accès et des connexions sans fil et/ou filaires, par changement d'une configuration courante (CUR_CONF) du réseau d'ordinateurs en une nouvelle configuration (NEW_CONF) du réseau d'ordinateurs, dans lequel

   • le réseau d'ordinateurs dans la configuration courante (CUR_CONF) communique un message ou une multitude de messages (1101a, 1101b, 1101c, 1102a, 1102b) et
   • un dispositif de surveillance (M) observe au moins un certain motif de trafic (TP) que le message ou la multitude de messages (1101a, 1101b, 1101c, 1102a, 1102b) génèrent et
   • un extracteur (E) prend ledit motif de trafic (TP) comme entrée provenant du dispositif de surveillance (M) et génère un ou une multitude de paramètres de trafic (T_PAR) pour ledit message ou ladite multitude de messages (1101a, 1101b, 1101c, 1102a, 1102b) et
   • un optimiseur (O) utilise les paramètres de trafic (T_PAR) pour générer la nouvelle configuration (NEW_CONF) et/ou pour générer des recommandations (RECOM) pour une nouvelle configuration (NEW_CONF), **caractérisé par le fait que**

   le réseau d'ordinateurs dans une configuration courante (CUR_CONF) communique un sous-ensemble (1101a, 1101b, 1101c, 1102a, 1102b) des messages (1101a, 1101b, 1101c, 1102a, 1102b) selon un paradigme de communication non synchronisé et le dispositif de surveillance (M) observe le motif de trafic (TP) dudit ensemble de messages non synchronisés (1101a, 1101b, 1101c, 1102a, 1102b) et l'extracteur (E) analyse ledit motif de trafic (TP) et l'extracteur (E) affecte un paramètre ou une multitude de paramètres auxdits messages non synchronisés (1101a, 1101b, 1101c, 1102a, 1102b) et l'optimiseur (O) utilise les paramètres de trafic (T_PAR) pour générer une nouvelle configuration (NEW_CONF) dans laquelle un message non synchronisé ou une multitude de messages non synchronisés (1101a, 1101b, 1101c) sont communiqués selon un paradigme de communication à déclenchement temporel au moins à travers une partie du réseau d'ordinateurs.

2. Procédé selon la revendication 1, dans lequel l'optimiseur (O) exécute une ou une multitude des étapes d'optimisation suivantes :

   - modifier les priorités avec lesquelles des messages sont transférés par des coupleurs en étoile
   - modifier les routes d'un message à travers un réseau de telle sorte que le message sera envoyé le long d'un chemin différent
   - chiffrer ou déchiffrer des messages ou parties de messages

      ◦ modifier la clé de chiffrement utilisée pour le chiffrement de messages ou parties de messages

   - arrêter de chiffrer/déchiffrer des messages ou parties de messages
   - modifier la vitesse de communication avec laquelle des messages sont communiqués sur les liaisons de communication
   - condenser plusieurs messages en un seul message
   - diviser un message unique en plusieurs messages
   - modifier les contenus d'un message ou d'une multitude de messages.

3. Réseau d'ordinateurs consistant en des noeuds et des coupleurs en étoile et/ou des points d'accès et des connexions sans fil et/ou filaires, dans lequel, pour améliorer la qualité de service dans le réseau d'ordinateurs par changement d'une configuration courante (CUR_CONF) du réseau d'ordinateurs en une nouvelle configuration (NEW_CONF) du réseau d'ordinateurs,

   • le réseau d'ordinateurs dans la configuration courante (CUR_CONF) est configuré pour communiquer un message ou une multitude de messages (1101a, 1101b, 1101c, 1102a, 1102b) et
   • dans lequel le réseau d'ordinateurs comprend un dispositif de surveillance (M) qui est configuré pour observer au moins un certain motif de trafic (TP) que le message ou la multitude de messages (1101a, 1101b, 1101c, 1102a, 1102b) génèrent, et dans lequel
   • le réseau d'ordinateurs comprenant un extracteur (E) qui est configuré pour prendre ledit motif de trafic (TP) comme entrée provenant du dispositif de surveillance (M) et pour générer un ou une multitude de paramètres de trafic (T_PAR) pour ledit message ou ladite multitude de messages (1101a, 1101b, 1101c, 1102a, 1102b) et

• dans lequel le réseau d'ordinateurs comprend un optimiseur (O) qui est configuré pour utiliser les paramètres de trafic (T_PAR) pour générer la nouvelle configuration (NEW_CONF) et/ou pour générer des recommandations (RECOM) pour une nouvelle configuration (NEW_CONF), **caractérisé par le fait que**

le réseau d'ordinateurs dans une configuration courante (CUR_CONF) est configuré pour communiquer un sous-ensemble (1101a, 1101b, 1101c, 1102a, 1102b) des messages (1101a, 1101b, 1101c, 1102a, 1102b) selon un paradigme de communication non synchronisé et le dispositif de surveillance (M) est configuré pour observer le motif de trafic (TP) dudit ensemble de messages non synchronisés (1101a, 1101b, 1101c, 1102a, 1102b) et l'extracteur (E) est configuré pour analyser ledit motif de trafic (TP) et l'extracteur (E) est configuré pour affecter un paramètre ou une multitude de paramètres auxdits messages non synchronisés (1101a, 1101b, 1101c, 1102a, 1102b) et l'optimiseur (O) est configuré pour utiliser les paramètres de trafic (T_PAR) pour générer une nouvelle configuration (NEW_CONF) dans laquelle un message non synchronisé ou une multitude de messages non synchronisés (1101a, 1101b, 1101c) sont communiqués selon un paradigme de communication à déclenchement temporel au moins à travers une partie du réseau d'ordinateurs.

**FIG. 1 (State-of-the-art)**

FIG. 2 (State-of-the-art)

**FIG. 2a**

```
┌─────────────────────────────────────┐
│                                     │
│              MONITOR                │ ⌇ M
│                                     │
└─────────────────────────────────────┘
                    │
                    │  ⌇ TP
                    ▼
┌─────────────────────────────────────┐
│                                     │
│              EXTRACT                │ ⌇ E
│                                     │
└─────────────────────────────────────┘
                    │
                    │  ⌇ T_PAR
                    ▼
┌─────────────────────────────────────┐
│                                     │
│              OPTIMIZE               │ ⌇ O
│                                     │
└─────────────────────────────────────┘
          │                   │
NEW_CONF ⌇│                   │⌇ RECOM
          ▼                   ▼
```

**FIG. 3**

**FIG. 4**

**FIG. 5**

**FIG. 6**

101

send

1401    1101

102

send

1402    1102

1101

receive    1102

201

send

1101    1102

1403    1404

105

receive    1101    1102

**FIG. 7 (state-of-the-art)**

101

send

1501    1601

102

send

1601    1502    1602    1602

receive

201

send

1503    1601    1504    1602

1601    1602

105

receive

**FIG. 8 (state-of-the-art)**

Echtzeit

17

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002097679 A1

**Non-patent literature cited in the description**

- Dynamic configuration of a time-triggered router for controller area network. **ROLAND KAMMERER et al.** PROCEEDINGS OF 2012 IEEE 17TH INTERNATIONAL CONFERENCE ON EMERGING TECHNOLOGIES & FACTORY AUTOMATION (ETFA 2012). IEEE, 17 September 2012, 1-10

- Deterministic system design with Time-Triggered technology. **POLEDNA STEFAN et al.** 2014 MICROELECTRONIC SYSTEMS SYMPOSIUM (MESS). IEEE, 08 May 2014, 1-4